# EUROPÄISCHE PATENTSCHRIFT

(11) **EP 2 604 463 B1**
(45) Veröffentlichungstag und Bekanntmachung des Hinweises auf die Patenterteilung: **29.06.2016**
(21) Anmeldenummer: 12189863.9
(22) Anmeldetag: 25.10.2012
(51) Int. Cl.: B60K 26/02, B60K 31/00

(54) **Glätten eines Fahrpedalsignals**
Smoothing an accelerator pedal signal
Lissage d'un signal de pédale de conduite

(30) Priorität: 12.12.2011 DE 102011088289
(43) Veröffentlichungstag der Anmeldung: 19.06.2013
(73) Patentinhaber: ROBERT BOSCH GMBH, 70442 Stuttgart (DE)
(72) Erfinder: Biggel, Christoph, 70736 Fellbach (DE)

(56) Entgegenhaltungen:
- WO-A1-2004/108464

## Beschreibung

### GEBIET DER ERFINDUNG

Die Erfindung betrifft ein Verfahren, eine Steuerung, ein Computerprogramm und ein computerlesbares Medium zum Glätten eines Fahrpedalsignals. Die Erfindung betrifft außerdem ein Fahrzeug.

### HINTERGRUND DER ERFINDUNG

Einige Fahrzeugtypen werden heutzutage mit aktiven Fahrpedalen ausgestattet, die über einen Aktuator verfügen, der situationsbedingt eine haptische Rückmeldung an den Fahrer geben kann. Ein aktives Fahrpedal ist beispielsweise in der DE 103 24 811 A1 beschrieben.

Weiter kann ein aktives Fahrpedal einen Sensor umfassen, wie etwa ein Potentiometer, der die aktuelle Stellung des Fahrpedals bestimmt und diese dann als Fahrpedalrohsignal ausgibt. Die haptische Rückmeldung (zum Beispiel Vibration, Pulsation) des Fahrpedals kann zu einer ungewollten Veränderung des wirklichen Fahrpedalsignals führen, d.h. des Signals, dass der Fahrer an das Pedal abgeben wollte.

Das erzeugte Fahrpedalrohsignal wird mehreren Komponenten des Fahrzeugs übermittelt, wie etwa einer Steuerungseinheit der Drosselklappe. Durch haptische Rückmeldungen kann es dann dazu kommen, dass diese Komponenten anders angesteuert werden, obwohl keine Veränderung des wirklichen Fahrpedalsignals durch den Fahrer gewollt ist. Dies kann zu vermehrten Steuerungsänderungen der Komponenten führen, wodurch eventuell deren Lebensdauer verkürzt werden könnte.

### ZUSAMMENFASSUNG DER ERFINDUNG

Um ein geglättetes Fahrpedalrohsignal zu erzeugen, ist ein simples Abziehen des Steuersignals, das an den Aktuator des Fahrpedals gesandt wird vom Fahrpedalrohsignal, das vom Sensor ausgegeben wird, häufig nicht möglich, da die haptische Rückmeldung, die vom Aktuator erzeugt wird, von verschiedensten mechanischen Systemen verzerrt und verzögert werden kann, bis die eigentliche haptische Rückmeldung an den Fahrer entsteht, die auch der Sensor dann erfasst.

Es ist Aufgabe der Erfindung bei einem aktiven Fahrpedal ein Fahrpedalrohsignal zu erzeugen, dass mehr dem vom Fahrer erzeugten Fahrpedalsignal entspricht.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein erster Aspekt der Erfindung betrifft ein Verfahren zum Glätten eines Fahrpedalsignals eines aktiven Fahrpedals. Ein aktives Fahrpedal kann dabei ein Fahrpedal sein, das dazu ausgeführt ist, eine haptische Rückmeldung für den Fahrer mit einem Aktuator zu erzeugen. Das Fahrpedal kann auch einen Sensor umfassen, der dazu ausgeführt ist, die aktuelle Stellung bzw. Position des aktiven Fahrpedals zu erfassen und als Fahrpedalrohsignals auszugeben.

Gemäß einer Ausführungsform der Erfindung umfasst das Verfahren die Schritte von: Erfassen eines Fahrpedalrohsignals mit einem Sensor; Erzeugen einer haptischen Rückmeldung am Fahrpedal durch einen Aktuator; Zwischenspeichern des Fahrpedalrohsignals, wenn keine haptische Rückmeldung erzeugt wird; und Bestimmen eines geglättetes Fahrpedalsignal basierend auf dem gespeicherten Fahrpedalrohsignal, wenn eine haptische Rückmeldung erzeugt wird.

Damit werden das ungewollte Verändern des eigentlichen Fahrpedalrohsignals und somit auch das ungewollte Ansteuern der oben genannten Komponenten unterbunden (wie etwa die Drosselklappe), was wiederum zu einer verlängerten Lebendauer dieser Komponenten führen kann. Für den Fahrer ist nur die tatsächliche haptische Rückmeldung spürbar, ohne dass dabei eventuell eine dadurch ungewollte Reaktion des Fahrzeugs zu spüren ist (wie beispielsweise Drehzahlschwankungen).

Beispielsweise wird das aktuelle Fahrpedalrohsignal durch eine Steuerung ausgelesen und es wird erkannt, wann eine haptische Rückmeldung am Fahrpedal anliegt. Die daraus resultierende ungewollte Veränderung des Fahrpedalrohsignals wird von der Steuerung erkannt und (zumindest zum größten Teil) eliminiert.

Beim Erzeugen einer haptischen Rückmeldung kann auch ein Rückmeldungssignal erzeugt werden, wobei das Bestimmen eines geglätteten Fahrpedalsignals auch basierend auf dem Rückmeldungssignal erfolgt. Es wird nicht nur einfach das Fahrpedalrohsignal durch Filterung des Fahrpedalrohsignals geglättet, wodurch eine Verzögerung des Signals auftreten kann, sondern bei einer ungewollten Veränderung des Fahrpedalrohsignals aufgrund einer anliegenden haptischen Rückmeldung wird auch das Rückmeldungssignal in Betracht gezogen.

Gemäß einer Ausführungsform der Erfindung ist das geglättete Fahrpedalsignal das gespeicherte Fahrpedalrohsignal, wenn eine haptische Rückmeldung erzeugt wird bzw. wenn ein positives Rückmeldungssignal erfasst wird. Mit anderen Worten kann das aktuelle Fahrpedalrohsignals also während einer haptischen Rückmeldung durch ein aktives Fahrpedal eingefroren werden.

Gemäß einer Ausführungsform der Erfindung ist das geglättete Fahrpedalsignal ein aktuelles Fahrpedalrohsignal, wenn keine haptische Rückmeldung erzeugt wird. Ansonsten, ohne haptische Rückmeldung, kann das aktuelle Fahrpedalrohsignal unverändert ausgegeben werden.

Gemäß einer Ausführungsform der Erfindung umfasst das Verfahren weiter die Schritte von: Vergleichen des gespeicherten Fahrpedalrohsignals mit dem aktuellen Fahrpedalsignal; Aktualisieren des gespeicherten Fahrpedalsignals mit dem aktuellen Fahrpedalsignal, wenn das gespeicherte Fahrpedalrohsignals von dem aktuellen Fahrpedalsignal um mehr als einen vordefinierten Wert abweicht. Wenn der Fahrer das Fahrpedal während einer haptischen Rückmeldung betätigt, beispielsweise um zu beschleunigen, kann dies auf diese Weise erkannt werden. Das Einfrieren des Fahrpedalrohsignals kann dann bei einem veränderten gespeicherten Fahrpedalrohsignalwert erfolgen.

Gemäß einer Ausführungsform der Erfindung ist der vordefinierte Wert größer als eine maximale Änderung des Fahrpedalrohsignals durch die haptische Rückmeldung. So kann eine Änderung der Fahrpedalstellung durch den Fahrer und eine Änderung durch die haptische Rückmeldung unterschieden werden.

Gemäß einer Ausführungsform der Erfindung umfasst das Verfahren weiter den Schritt von Steuern eines Antriebs des Fahrzeugs mit dem geglätteten Fahrpedalsignal. Das geglättete Fahrpedalrohsignal kann für weitere Berechnungen (zum Beispiel zum Steuern und/oder zum Regeln) verwendet werden. Eine normale Filterung des Fahrpedalrohsignals kann dabei zu Verzögerungen führen. Bei dem Verfahren, so wie es obenstehend und untenstehend beschrieben ist, muss keine Verzögerung erfolgen. Somit kann ein genaueres und schnelleres Steuern und Regeln durchgeführt werden.

Ein weiterer Aspekt der Erfindung betrifft eine Steuerung bzw. Steuereinheit für ein Fahrzeug, die dazu ausgeführt ist, das Verfahren, so wie es obenstehend und untenstehend beschrieben ist, durchzuführen. Diese Steuerung kann beispielsweise ein Steuersignal für den Aktuator erzeugen, das Fahrpedalrohsignal empfangen und das geglättete Fahrpedalsignal erzeugen.

Ein weiterer Aspekt der Erfindung betrifft ein Fahrzeug mit einem aktiven Fahrpedal und einer derartigen Steuerung. Das Fahrzeug kann ein Straßenfahrzeug, beispielsweise ein PKW oder LKW sein.

Dabei ist zu verstehen, dass Merkmale des Fahrzeugs und insbesondere Merkmale der Steuerung Merkmale des Verfahrens sein können und umgekehrt.

Ein weiterer Aspekt der Erfindung betrifft ein Computerprogamm, das, wenn es auf einem Prozessor ausgeführt wird, den Prozessor dazu anleitet, die Schritte des Verfahrens zum Glätten des Fahrpedalsignals durchzuführen. Ein weiterer Aspekt der Erfindung betrifft ein computerlesbares Medium, auf dem ein derartiges Computerprogramm gespeichert ist. Beispielsweise kann die Steuerung des Fahrpedalsystems einen Prozessor und einen nicht-flüchtigen Speicher (ROM, EPROM usw.) umfassen, auf dem das Computerprogramm gespeichert ist.

### KURZE BESCHREIBUNG DER FIGUREN

Im Folgenden werden Ausführungsbeispiele der Erfindung mit Bezug auf die beiliegenden Figuren detailliert beschrieben.
Fig. 1 zeigt ein Fahrzeug gemäß einer Ausführungsform der Erfindung.
Fig. 2 zeigt ein Diagramm über die Funktionalität zur Berechnung eines geglätteten Fahrpedalsignals gemäß einer Ausführungsform der Erfindung.

Grundsätzlich sind identische oder ähnliche Teile mit den gleichen Bezugszeichen versehen.

### DETAILIERTE BESCHREIBUNG VON AUSFÜHRUNGSBEISPIELEN

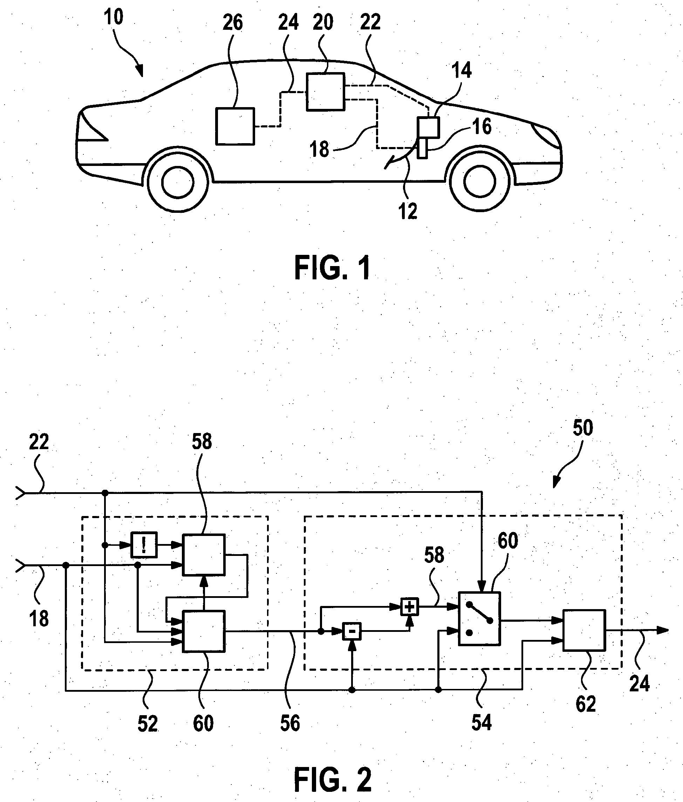

Fig. 1 zeigt ein Fahrzeug 10 mit einem aktiven Fahrpedal 12. Das Fahrpedal 12 umfasst einen Aktuator 14, beispielsweise einen Stellmotor, der dazu ausgeführt ist, dem Fahrpedal 12 eine haptische Rückmeldung aufzuprägen, beispielsweise das Fahrpedal 12 eine Sekunde lang vibrieren zu lassen. Weiter umfasst das Fahrpedal 12 eine Sensor 16, beispielsweise ein Potentiometer, der dazu ausgeführt ist, die aktuelle Stellung des Fahrpedals 12 zu erfassen.

Der Sensor 16 gibt ein Fahrpedalrohsignal 18 aus, das von einer Steuerung 20 empfangen wird. Die Steuerung 20 kann auch ein Rückmeldungssignal 22 an den Aktuator 14 senden, der daraufhin eine haptische Rückmeldung an den Fahrer erzeugt, in dem er beispielsweise das Fahrpedal 12 vibrieren lässt. In diesem Fall kann die haptische Rückmeldung auch die aktuelle Stellung des Fahrpedals 12 beeinflussen und somit das Fahrpedalrohsignal 18 beeinflussen und verändern, so dass es sich von dem eigentlichen Fahrpedalsignal, das der Fahrer abgeben wollte, in dem er das Fahrpedal 12 bis zu einer bestimmten Stellung durchdrückt, unterscheidet.

Die Steuerung 20 ist nun wie obenstehend und untenstehend beschrieben in der Lage das Fahrpedalrohsignal 18 zu glätten und die Rückwirkung der haptischen Rückmeldung zumindest teilweise wieder aus dem Fahrpedalrohsignal 18 zu entfernen. Das auf diese Weise entstehende geglättete Fahrpedalsignal 24 kann beispielsweise dann dem Antrieb 26 des Fahrzeugs 10 zugeführt werden, um etwa eine Drosselklappe anzusteuern.

Fig. 2 zeigt ein Diagramm über die Funktionalität zur Berechnung des geglätteten Fahrpedalsignals 24, das von der Steuerung 20 durchgeführt wird.

Die Eingangsgrößen des in der Fig. 2 gezeigten Moduls 50 der Steuerung 20 sind das Rückmeldungssignal 22 und das aktuelle Fahrpedalrohsignal 18. Das Rückmeldungssignal 22 kann lediglich die Information enthalten, dass eine Anforderung einer haptischen Rückmeldung anliegt oder nicht.

Das in der Fig. 2 gezeigte Modul 50 umfasst ein Speichermodul 52 für das Zwischenspeichern des aktuellen aktuelle Fahrpedalrohsignal 18 und ein Mittelwertbildungsmodul 54 zum Bilden eines Mittelwerts zwischen einem gespeicherten Fahrpedalrohsignal 56 und dem aktuellen Fahrpedalrohsignal 18, wodurch das geglättete Rohsignal 24 entsteht.

Das Fahrpedalrohsignal 18 wird im Speichermodul 52 zwischengespeichert, um die Abweichung durch die haptische Rückmeldung (z. B. Vibrationen) zu korrigieren.

Liegt keine haptische Rückmeldung vor bzw. ist das Rückmeldungssignal 22 negativ, wird das aktuelle Fahrpedalrohsignal 18 durch das Modul 58 gespeichert, um im Falle einer dann einsetzenden haptischen Rückmeldung diesen Wert zur Verfügung zu haben.

Ist eine haptische Rückmeldung aktiv bzw. ist das Rückmeldungssignal 22 positiv, wird das durch das Modul 58 gespeicherte Rohsignal durch Bereichsüberprüfung im Modul 60 überprüft. Weicht das gespeicherte Fahrpedalrohsignal 56 vom aktuellen Fahrpedalrohsignal 18 um mehr als einen vorgegebenen Wert ab, wird das gespeicherte Fahrpedalrohsignal 56 mit dem aktuellen Fahrpedalrohsignal 18 aktualisiert. Dieser vorgegebene Wert kann größer als der maximale Ausschlag der haptischen Rückmeldung gewählt werden. Somit wird das gespeicherte Fahrpedalrohsignal 56 auch aktualisiert, wenn sich das Fahrpedalrohsignal 18 durch Betätigen des Fahrpedals 12 durch den Fahrer verändert.

Insgesamt gibt das Speichermodul 52 ein gespeichertes Fahrpedalrohsignal 56 aus, das entweder einem Wert zu einem Zeitpunkt entspricht, an dem das Rückmeldungssignal 22 auf positiv gewechselt hat bzw. der Fahrer die Stellung des Fahrpedals 12 stark verändert hat.

Mit dem Modul 54 wird im Falle dessen, dass das Rückmeldungssignal 22 positiv ist eine Mittelwertsberechnung bzw. Mittelwertsbildung zwischen dem aktuellen Rohsignal 18 und dem gespeicherte Rohsignal 56 durchgeführt.

Dazu wird im Modul 54 das aktuellen Fahrpedalrohsignal 18 vom gespeicherte Fahrpedalrohsignal 56 abgezogen und die Differenz zum gespeicherten Fahrpedalrohsignal 56 hinzuaddiert, was zu einem inversen Fahrpedalrohsignal 58 führt. Ist das Rückmeldungssignal 22 positiv, führt der Schalter 60 das inverse Fahrpedalrohsignal 58 dem Modul 62 zu, dass dann den Mittelwert zwischen dem inversen Fahrpedalrohsignal 58 und dem aktuellen Fahrpedalrohsignal 18 berechnet. Nach der Mittelwertsbildung sind dann die ungewollten Veränderungen des Fahrpedalrohsignals 18 durch die haptischen Rückmeldungen nicht mehr vorhanden.

Liegt keine haptische Rückmeldung vor bzw. ist das Rückmeldungssignal 22 negativ gibt das in der Fig. 2 gezeigte Modul das Fahrpedalrohsignal 18 unverändert aus. Der Schalter 60 übergibt dem Modul 62 das aktuelle Fahrpedalsignal 60. Nur wenn eine haptische Rückmeldung gefordert ist, wird die Mittelwertsbildung zwischen gespeicherten Fahrpedalrohsignal 56 und aktuellem Fahrpedairohsignal 18 im Modul 54 durchgeführt. Ansonsten wird das aktuelle Fahrpedalrohsignal 18 unverändert als geglättetes Fahrpedalsignal 24 ausgegeben. Das geglättete Rohsignal 24 entspricht dem aktuellen Fahrpedalrohsignal 18, wenn keine haptische Rückmeldung 22 anliegt.

Anstatt des Moduls 54 kann auch, wenn keine haptische Rückmeldung vorliegt bzw. das Rückmeldungssignal 22 negativ ist, das Fahrpedalrohsignal 18 unverändert als das geglättetes Fahrpedalsignal 24 ausgegeben werden und wenn das Rückmeldungssignal 22 positiv ist, das gespeicherten Fahrpedalrohsignal 56 als das geglättetes Fahrpedalsignal 24 ausgegeben werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Glätten eines Fahrpedalsignals eines aktiven Fahrpedals (12), das Verfahren umfassend die Schritte:
Erfassen eines Fahrpedalrohsignals (18) mit einem Sensor (16);
Erzeugen einer haptischen Rückmeldung am Fahrpedal (12) durch einen Aktuator (14);
**gekennzeichnet durch** die Schritte:
Zwischenspeichern des Fahrpedalrohsignals (18), wenn keine haptische Rückmeldung erzeugt wird;
Bestimmen eines geglättetes Fahrpedalsignal (24) basierend auf dem gespeicherten Fahrpedalrohsignal (56), wenn eine haptische Rückmeldung erzeugt wird.

2. Verfahren nach Anspruch 1,
wobei das geglättete Fahrpedalsignal (24) das gespeicherte Fahrpedalrohsignal (56) ist, wenn eine haptische Rückmeldung erzeugt wird.

3. Verfahren nach Anspruch 1 oder 2,
wobei das geglättete Fahrpedalsignal (24) ein aktuelles Fahrpedalrohsignal (18) ist, wenn keine haptische Rückmeldung erzeugt wird.

4. Verfahren nach einem der vorhergehenden Ansprüche, weiter umfassend die Schritte von:
Vergleichen des gespeicherten Fahrpedalrohsignals (56) mit dem aktuellen Fahrpedalsignal (18);
Aktualisieren des gespeicherten Fahrpedalsignals (56) mit dem aktuellen Fahrpedalsignal (18), wenn das gespeicherte Fahrpedalrohsignals (56) von dem aktuellen Fahrpedalsignal (18) um mehr als einen vordefinierten Wert abweicht.

5. Verfahren nach Anspruch 4,
wobei der vordefinierte Wert größer ist als eine maximale Änderung des Fahrpedalrohsignals (18) durch die haptische Rückmeldung.

6. Verfahren nach einem der vorhergehenden Ansprüche, weiter umfassend den Schritt:
Steuern eines Antriebs (26) des Fahrzeugs mit dem geglätteten Fahrpedalsignal (24).

7. Steuerung (20) für ein Fahrzeug (10), die dazu ausgeführt ist, das Verfahren nach einem der Ansprüche 1 bis 6 durchzuführen.

8. Fahrzeug (10), umfassend:
ein aktives Fahrpedal (12),
eine Steuerung (20) nach Anspruch 7.

9. Computerprogamm, das, wenn es auf einem Prozessor ausgeführt wird, den Prozessor dazu anleitet, die Schritte des Verfahrens nach einem der Ansprüche 1 bis 6 auszuführen.

10. Computerlesbares Medium, auf dem ein Computerprogramm nach Anspruch 9 gespeichert ist.

## Claims

1. Method for smoothing an accelerator pedal signal from an active accelerator pedal (12), the method comprising the steps of:
sensing an accelerator pedal raw signal (18) using a sensor (16);
generating haptic feedback at the accelerator pedal (12) by means of an actuator (14);
**characterized by** the steps of:
buffering the accelerator pedal raw signal (18) if no haptic feedback is generated;
determining a smoothed accelerator pedal signal (24) on the basis of the stored accelerator pedal raw signal (56) if haptic feedback is generated.

2. Method according to Claim 1,
the smoothed accelerator pedal signal (24) being
the stored accelerator pedal raw signal (56) if haptic feedback is generated.

3. Method according to Claim 1 or 2,
the smoothed accelerator pedal signal (24) being a current accelerator pedal raw signal (18) if no haptic feedback is generated.

4. Method according to one of the preceding claims, also comprising the steps of:
comparing the stored accelerator pedal raw signal (56) with the current accelerator pedal signal (18):
updating the stored accelerator pedal signal (56) with the current accelerator pedal signal (18) if the stored accelerator pedal raw signal (56) differs from the current accelerator pedal signal (18) by more than a predefined value.

5. Method according to Claim 4,
the predefined value being greater than a maximum change in the accelerator pedal raw signal (18) caused by the haptic feedback.

6. Method according to one of the preceding claims, also comprising the step of:
controlling a drive (26) of the vehicle using the smoothed accelerator pedal signal (24).

7. Controller (20) for a vehicle (10), which is designed to carry out the method according to one of Claims 1 to 6.

8. Vehicle (10) comprising:
an active accelerator pedal (12),
a controller (20) according to Claim 7.

9. Computer program which, when executed on a processor, instructs the processor to carry out the steps of the method according to one of Claims 1 to 6.

10. Computer-readable medium on which a computer program according to Claim 9 is stored.

## Revendications

1. Procédé de lissage d'un signal de pédale d'accélérateur d'une pédale d'accélérateur active (12), le procédé comprenant les étapes consistant à :
détecter un signal brut de pédale d'accélérateur (18) à l'aide d'un capteur (16) ;
générer une rétroaction haptique sur la pédale d'accélérateur (12) par l'intermédiaire d'un actionneur (14) ;
**caractérisé par** les étapes consistant à :
mettre en mémoire tampon le signal brut de pédale d'accélérateur (18) lorsqu'aucune rétroaction n'est générée ;
déterminer un signal de pédale d'accélérateur lissé (24) sur la base du signal brut de pédale d'accélérateur stocké (56) lorsqu'une rétroaction haptique est générée.

2. Procédé selon la revendication 1,
dans lequel le signal de pédale d'accélérateur lissé (24) est le signal brut de pédale d'accélérateur stocké (56) lorsqu'une rétroaction haptique est générée.

3. Procédé selon la revendication 1 ou 2,
dans lequel le signal de pédale d'accélérateur lissé (24) est un signal brut de pédale d'accélérateur instantané (18) lorsqu'une rétroaction haptique n'est générée.

4. Procédé selon l'une quelconque des revendications précédentes, comprenant en outre les étapes consistant à :
comparer le signal brut de pédale d'accélérateur stocké (56) au signal de pédale d'accélérateur instantané (18) ;
actualiser le signal de pédale d'accélérateur stocké (56) avec le signal de pédale d'accélérateur instantané (18) lorsque le signal brut de pédale d'accélérateur stocké (56) s'écarte du signal de pédale d'accélérateur instantané (18) de plus d'une valeur prédéfinie.

5. Procédé selon la revendication 4,
dans lequel la valeur prédéfinie est supérieure à une variation maximale du signal brut de pédale d'accélérateur (18) du fait de la rétroaction haptique.

6. Procédé selon l'une quelconque des revendications précédentes, comprenant en outre l'étape consistant à :
commander un système d'entraînement (26) du véhicule à l'aide du signal de pédale d'accélérateur lissé (24).

7. Unité de commande (20) destinée à un véhicule (10), qui est conçu pour mettre en oeuvre le procédé selon l'une quelconque des revendications 1 à 6.

8. Véhicule (10) comprenant :
une pédale d'accélérateur active (12),
une unité de commande (20) selon la revendication 7.

9. Programme d'ordinateur qui, lorsqu'il est exécuté sur un processeur, amène le processeur à exécuter les étapes du procédé selon l'une quelconque des revendications 1 à 6.

10. Support lisible par ordinateur sur lequel est stocké un programme d'ordinateur selon la revendication 9.
